# EUROPÄISCHE PATENTSCHRIFT

(11) **EP 2 935 878 B1**
(45) Veröffentlichungstag und Bekanntmachung des Hinweises auf die Patenterteilung: **07.12.2016**
(21) Anmeldenummer: 13777271.1
(22) Anmeldetag: 15.10.2013
(51) Int. Cl.: F03D 80/00

(54) **GEFRIERPUNKTSERNIEDRIGENDE BESCHICHTUNG AUS KUNSTSTOFFFOLIEN ZUR AUFBRINGUNG AUF ROTORBLÄTTERN VON WINDENERGIEANLAGEN**
FREEZING-POINT-LOWERING COATING COMPOSED OF PLASTICS FOILS FOR APPLYING TO ROTOR BLADES OF WIND TURBINES
REVÊTEMENT ABAISSANT LE POINT DE CONGÉLATION SOUS FORME DE FEUILLES DE MATIÈRE PLASTIQUE À DÉPOSER SUR LES PALES DE ROTOR D'ÉOLIENNES

(30) Priorität: 20.12.2012 DE 102012025087
(43) Veröffentlichungstag der Anmeldung: 28.10.2015
(73) Patentinhaber: Fraunhofer Gesellschaft zur Förderung der angewandten Forschung E.V., 80686 München (DE)
(72) Erfinder: HAUPT, Michael, 73326 Deggingen (DE); OEHR, Christian, 71083 Herrenberg (DE)
(74) Vertreter: Schrell, Andreas
(86) Internationale Anmeldenummer: PCT/EP2013/071487
(87) Internationale Veröffentlichungsnummer: WO 2014/095112

(56) Entgegenhaltungen:
- EP-A2- 1 238 717
- WO-A2-2010/028653
- DE-A1- 10 134 362
- DE-U1- 29 923 485
- US-A- 4 863 756
- HAUPT ET AL: "Anti-Icing Coatings", 1. Januar 2011 (2011-01-01), JAHRBUCH OBERFLÄCHEN TECHNIK, EUGEN LEUZE VERKAG KG, DE, PAGE(S) 184 - 190, XP007922482, das ganze Dokument

## Beschreibung

Die vorliegende Erfindung betrifft Rotorblätter von Geräten, insbesondere Windenergieanlagen, mit einer Anti-Eis-Beschichtung sowie Verfahren zu deren Herstellung und deren Verwendung.

Windkraftanlagen, auch als Windenergieanlagen (WEA) bezeichnet, dienen der Bereitstellung elektrischer Energie. Windenergieanlagen sind in der Regel aus den Komponenten Fundament, Turm, Gondel und Rotor aufgebaut. Der an der Gondel angebrachte Rotor umfasst eine Nabe oder einen Rotorkopf, eine Drehachse sowie regelmäßig drei Rotorblätter. Derartige Rotoren können auch als Darieus-Rotoren, H-Rotoren oder Savonius-Rotoren ausgeführt sein.

Der Einsatz derartiger Windenergieanlagen findet bekanntermaßen unter atmosphärischem Einfluss statt und ist dementsprechend durch eine häufige Exposition zu Regen, Kondensat oder Schnee gekennzeichnet. Derartiger Niederschlag setzt sich unter entsprechenden Umweltbedingungen in Form von Eis auch auf den Rotorblättern einer Windenergieanlage fest. Als problematisch erweist sich unter anderem, dass das zusätzliche Gewicht dieses Niederschlags am Rotorblatt zu einer Unwucht des Rotors führen kann, so dass die Windenergieanlage häufig abgeschaltet werden muss und/oder ggf. sogar ein Schaden auftritt. Der sich ausbildende Eisansatz führt in der Regel zu einer zusätzlichen Oberflächenrauheit des Rotorblatts mit der Folge zusätzlicher Windgeräusche. Die sich verändernde Dynamik der Rotation reduziert die Effizienz der Windenergieanlage mit der Folge von Ertragsausfällen, die darüber hinaus auch durch eine aufgrund einer gegebenenfalls erforderlichen Reparatur notwendig werdende Stillstandzeit beeinträchtigt werden kann. Schließlich kann der Niederschlag, insbesondere Eis, in die Umwelt abgeschleudert werden und damit die Sicherheit der Umgebung gefährden. Eine Zusammenfassung der mit der Niederschlagsbildung auf Rotorblättern von Windenergieanlagen zusammenhängenden technischen Probleme findet sich zum Beispiel in Seifert und Tammelin, Final Report, Deutsches Windenergieinstitut Wilhelmshaven, JOU2-CT93-0366, DEWI 1996.

Zur Lösung der vorstehend erörterten Probleme werden die Rotorblätter häufig mit elektrischen Heizmatten, die in das Rotorblatt eingearbeitet sind, durch heiße Luft oder durch Mikrowellen von innen beheizt. Notwendig ist dazu die Integration von Sensoren in das Rotorblatt, die die Eisbildung registrieren und die Heizsysteme an- und abschalten.

In dem Jahrbuch "Oberflächentechnik", 2011, Band 67, Seiten 184 bis 191, werden Anti-Eis-Beschichtungen offenbart, die im Niederdruck-Plasma-Verfahren unter Einsatz von Fluor-haltigen Monomergasen erzeugt werden.

Der vorliegenden Erfindung liegt das technische Problem zugrunde, die vorstehend erwähnten Schwierigkeiten zu überwinden, insbesondere eine kostengünstige, effiziente und verlässliche Lehre zu entwickeln, gemäß der ein Festgefrieren von Niederschlag auf Rotorblättern, insbesondere von Windenergieanlagen, vermieden wird.

Insbesondere soll eine technische Lehre bereitgestellt werden, die einen lang anhaltenden, vorzugsweise permanenten und wirksamen Schutz gegen Vereisungen gewährleistet, vorzugsweise in kostengünstiger und leicht bereitzustellender Weise.

Die vorliegende Erfindung löst das ihr zugrundeliegende technische Problem durch die Bereitstellung der Lehren der unabhängigen Patentansprüche.

Die vorliegende Erfindung betrifft daher insbesondere ein Rotorblatt, umfassend eine auf mindestens einer Oberfläche des Rotorblatts aufgebrachte Anti-Eis-Beschichtung mit einer Dicke von bis zu 500 nm, bevorzugt von 10 bis 500 nm, wobei diese Beschichtung eine Strukturierung, bevorzugt im Mikrometerbereich, aufweist.

Bevorzugt ist auf der mindestens einen Oberfläche des Rotorblatts mindestens, bevorzugt genau, eine monomolekulare Schicht der Anti-Eis-Beschichtung aufgebracht.

Bevorzugt liegt die Strukturierung der Anti-Eis-Beschichtung im Mikrometerbereich vor, bevorzugt in Form eines Punkt- oder Linienmusters.

Die vorliegende Erfindung betrifft daher bevorzugt ein Rotorblatt, umfassend eine auf mindestens einer Oberfläche des Rotorblattes aufgebrachte gefrierpunktserniedrigende Anti-Eis-Beschichtung mit einer Dicke von 10 bis 500 nm, wobei diese Beschichtung eine Strukturierung im Mikrometerbereich aufweist.

Die erfindungsgemäß vorgesehene Anti-Eis-Beschichtung weist demgemäß bevorzugt eine Strukturierung im Mikrometerbereich auf, insbesondere eine topographische Strukturierung, insbesondere ein Punkt- oder Linienmuster.

Bevorzugt weist die Anti-Eis-Beschichtung eine topographische Strukturierung, insbesondere ein Strukturierungsmuster, bevorzugt eine Mikrostrukturierung, bevorzugt in Form eines Punkt- oder Linienmusters auf.

Vorzugsweise und in bevorzugter Ausführungsform ist die Anti-Eis-Beschichtung im Niederdruckplasmaverfahren hergestellt worden.

In besonders bevorzugter Ausführungsform weist die Anti-Eis-Beschichtung zusätzlich zu der Strukturierung im Mikrometerbereich auch eine Strukturierung im Nanometerbereich auf. In besonders bevorzugter Ausführungsform ist die Anti-Eis-Beschichtung eine Anti-Eis-Beschichtung, die eine Strukturierung im Mikrometerbereich und eine im Niederdruckplasmaverfahren erzeugte Strukturierung im Nanometerbereich aufweist.

Die vorliegende Erfindung betrifft in einer bevorzugten Ausführungsform ein vorgenanntes Rotorblatt, wobei die Strukturierung im Mikrometerbereich in Form eines Punkt- oder Linienmusters vorliegt.

Bevorzugt ist die Anti-Eis-Beschichtung gefrierpunktserniedrigend.

Die vorliegende Erfindung betrifft in bevorzugter Ausführungsform auch ein Rotorblatt, wobei die auf mindestens einer Oberfläche des Rotorblatts aufgebrachte Anti-Eis-Beschichtung mit einer Dicke von bis zu 500 nm a) 15 bis 75 Atom-% Fluor und b) 25 bis 85 Atom-% weitere Komponenten (jeweils bestimmt gemäß XPS-Analyse (Röntgenphotoelektronenspektroskopie, X-ray photoelectron spectroscopy) und bezogen auf Gesamt-Atom-% der Anti-Eis-Beschichtung) enthält, wobei die Anti-Eis-Beschichtung bevorzugt eine Strukturierung, insbesondere eine topographische Strukturierung, insbesondere ein Strukturierungsmuster, insbesondere ein Punkt- oder Linienmuster, aufweist.

Die vorliegende Erfindung betrifft in bevorzugter Ausführungsform auch ein Rotorblatt, wobei die auf mindestens einer Oberfläche des Rotorblatts aufgebrachte Anti-Eis-Beschichtung mit einer Dicke von bis zu 500 nm i) 25 bis 29 Atom-% Silicium, 22 bis 45 Atom-% Sauerstoff und 26 bis 49 Atom-% Kohlenstoff (jeweils bestimmt gemäß XPS-Analyse und bezogen auf Gesamt-Atom-% der Anti-Eis-Beschichtung) enthält, wobei die Anti-Eis-Beschichtung bevorzugt eine Strukturierung, insbesondere eine topographische Strukturierung, insbesondere ein Strukturierungsmuster, insbesondere ein Punkt- oder Linienmuster, aufweist.

Die vorliegende Erfindung betrifft in einer bevorzugten Ausführungsform auch ein Rotorblatt, umfassend eine auf mindestens einer Oberfläche des Rotorblatts aufgebrachte gefrierpunktserniedrigende Anti-Eis-Beschichtung einer Dicke von 50 bis 500 nm, enthaltend 25 bis 29 Atom-% Silizium (Si), 22 bis 45 Atom-% Sauerstoff (O) und 26 bis 49 Atom-% Kohlenstoff (C) (jeweils bestimmt gemäß XPS-Analyse (Röntgenphotoelektronenspektroskopie, X-ray photoelectron spectroscopie), bezogen auf Gesamt-Atom-% der Anti-Eis-Beschichtung), vorzugsweise 29 Atom-% Silizium, 22 Atom-% Sauerstoff und 49 Atom-% Kohlenstoff (jeweils bestimmt gemäß XPS-Analyse, bezogen auf Gesamt-Atom-% der Anti-Eis-Beschichtung).

Eine derartige bevorzugte Si-, O- und C-haltige Beschichtung wird im Folgenden auch als silikonartige Beschichtung bezeichnet.

In einer Ausführungsform der vorliegenden Erfindung weist die silikonartige Beschichtung Wasserstoff auf, ggf. bis zu 50 Atom-%.

Die vorliegende Erfindung löst das ihr zugrunde liegende technische Problem in bevorzugter Ausführungsform auch durch die Bereitstellung eines Rotorblatts, umfassend eine auf mindestens einer Oberfläche des Rotorblatts aufgebrachte gefrierpunktserniedrigende Anti-Eis-Beschichtung einer Dicke von 10 bis 200 nm, enthaltend, vorzugsweise bestehend aus, a) 15 bis 75 Atom-% Fluor und b) 25 bis 85 Atom-% weitere Komponenten, jeweils bestimmt gemäß XPS-Analyse und bezogen auf Gesamt-Atom-% der Anti-Eis-Beschichtung.

Eine derartige besonders bevorzugte Ausführungsform einer Beschichtung der vorliegenden Erfindung wird im Folgenden auch als fluorhaltige Beschichtung bezeichnet.

In besonders bevorzugter Ausführungsform sind die weiteren Komponenten der fluorhaltigen Beschichtung eine oder mehrere Komponenten ausgewählt aus der Gruppe bestehend aus Wasserstoff, Sauerstoff und Kohlenstoff.

Die erfindungsgemäße auf einem, vorzugsweise herkömmlichen, Rotorblatt aufgebrachte Anti-Eis-Beschichtung vermindert und/oder verzögert vorteilhafterweise die Eisbildung an dem Rotorblatt und bewirkt eine Gefrierpunktserniedrigung. Die Eishaftung wird vermindert. Dementsprechend wird das Rotorblatt vor Erosion durch Wind, Regen, Schnee und Vogeleinschlag geschützt. Vorteilhafterweise liegt die Anti-Eis-Beschichtung permanent an dem Rotorblatt vor und wirkt dementsprechend ständig, was sich als besonderer Vorteil gegenüber ein- und abschaltbaren Heizsystemen darstellt. Die Erfindung stellt daher auch ökonomische Vorteile bereit, insbesondere dergestalt, dass sich der Ertrag von Windenergieanlagen, insbesondere in nördlichen Frostregionen oder auch an höher gelegenen Standorten, insbesondere während der Wintermonate, erhöht und darüber hinaus die Umgebungssicherheit durch einen verminderten Eisabwurf reduziert oder verhindert wird.

Die erfindungsgemäß vorgesehene Beschichtung eines Rotorblatts kann in besonders bevorzugter Ausführungsform in Kombination mit bekannten vereisungsreduzierenden oder vereisungsverhindernden Systemen, z. B. Heizmatten, Heißluftsystemen, Mikrowellensystemen oder dergleichen, genutzt werden. Die vorliegende Anti-Eis-Beschichtung ermöglicht erfindungsgemäß auch ein Nachrüsten herkömmlicher, gegebenenfalls auch mit Eisbildungsverhinderungssystemen ausgerüsteter, Rotorblätter. Dies stellt sich als vorteilhaft gegenüber bereits bekannten Eisbildungsverhinderungssystemen dar, die in der Regel an Rotorblättern nicht nachgerüstet werden können.

Im Zusammenhang mit der vorliegenden Erfindung wird unter einem Rotor ein rotierender Teil einer Maschine oder eines Aggregats verstanden, insbesondere ein aerodynamisch wirkender Rotor. Üblicherweise weist ein Rotor eine Nabe oder einen Rotorkopf sowie Rotorblätter und eine Drehachse auf. Unter einem Rotor im Zusammenhang mit der vorliegenden Erfindung werden auch Darieus-Rotoren, H-Rotoren und Savonius-Rotoren verstanden.

Im Zusammenhang mit der vorliegenden Erfindung wird unter dem Begriff "Rotorblatt" auch eine Rotorblattanordnung, insbesondere mehrere Rotorblätter, verstanden.

Im Zusammenhang mit der vorliegenden Erfindung handelt es sich bei dem Rotorblatt insbesondere um ein Rotorblatt eines Gerätes, insbesondere einer Windenergieanlage, eines Fluggerätes, insbesondere eines Flugzeugs, insbesondere eines Helikopters, eines Propellerflugzeugs, eines Wasserflugzeuges, eines Modellflugzeuges oder dergleichen.

Erfindungsgemäß bereitgestellt wird auch ein Rotorblatt gemäß der vorliegenden Erfindung, wobei die Beschichtung eine Eis-Adhäsion von < 200 kPa aufweist.

Die erfindungsgemäß vorgesehene Anti-Eis-Beschichtung ist vorzugsweise hydrophob und oleophob.

Erfindungsgemäß bereitgestellt wird auch ein Rotorblatt gemäß der vorliegenden Erfindung, wobei die fluorhaltige Beschichtung bevorzugt polymere Fluor-Kohlenstoffschichten aufweist.

Die vorliegende Erfindung betrifft in bevorzugter Ausführungsform ein vorgenanntes Rotorblatt, das eine Beschichtung mit Antiadhäsionseigenschaft aufweist, wobei die fluorhaltige Beschichtung polymere Fluor-Kohlenstoffschichten aufweist.

Erfindungsgemäß bereitgestellt wird auch ein Rotorblatt gemäß der vorliegenden Erfindung, wobei die Beschichtung bevorzugt unmittelbar auf einer Oberfläche des Rotorblatts aufgebracht ist.

Atom-% der in der Anti-Eis-Beschichtung vorhandenen Elemente beziehen sich auf Gesamt-Atom-% der Anti-Eis-Beschichtung und addieren auf 100 Atom-% der Gesamt-Anti-Eis-Beschichtung auf.

Im Zusammenhang mit der vorliegenden Erfindung wird unter einem Muster eine gleichbleibende Struktur verstanden, gemäß der sich das Strukturierungsmerkmal, beispielsweise ein Punkt oder eine Linie, regelmäßig wiederholt. Eine zufällige Verteilung von Strukturierungselementen stellt daher kein Muster dar.

In besonders bevorzugter Ausführungsform der vorliegenden Erfindung ist die Strukturierung, insbesondere das Strukturierungsmuster, insbesondere das Punkt- oder Linienmuster, periodisch aufgebaut.

Erfindungsgemäß bereitgestellt und bevorzugt wird ein Rotorblatt gemäß der vorliegenden Erfindung, wobei die Beschichtung auf einen Träger, insbesondere einer Folie, vorliegt und mittels des Trägers, insbesondere einer Folie, auf einer Oberfläche des Rotorblatts aufgebracht ist, insbesondere fixiert ist, z. B. aufgeklebt ist.

Erfindungsgemäß bereitgestellt wird auch ein Rotorblatt gemäß der vorliegenden Erfindung, wobei die Beschichtung auf einem Träger aus Kunststoff auf der Oberfläche des Rotorblatts aufgebracht ist.

Erfindungsgemäß bereitgestellt wird auch ein Rotorblatt gemäß der vorliegenden Erfindung, wobei die Beschichtung auf dem Rotorblatt oder dem Träger mittels eines Niederdruckplasmaverfahrens aufgebracht ist.

Die erfindungsgemäße auf einem, vorzugsweise herkömmlichen, Rotorblatt aufgebrachte Anti-Eis-Beschichtung vermindert und/oder verzögert vorteilhafterweise die Eisbildung an dem Rotorblatt und bewirkt in bevorzugter Ausführung eine Gefrierpunktserniedrigung. Die Eishaftung wird vermindert. Dementsprechend wird das Rotorblatt vor Eis und Schnee geschützt. Vorteilhafterweise liegt die Anti-Eis-Beschichtung permanent an dem Rotorblatt vor und wirkt dementsprechend ständig.

Erfindungsgemäß bereitgestellt wird auch ein Rotorblatt gemäß der vorliegenden Erfindung, wobei das Punkt- oder Linienmuster eine Periodizität (P) von 20 µm, 40 µm, 80 µm, 100 µm, 120 µm, 140 µm oder 180 µm aufweist.

Unter der Periodizität wird der Abstand der Punkte oder Linien zueinander verstanden.

Erfindungsgemäß bereitgestellt wird auch ein Rotorblatt gemäß der vorliegenden Erfindung, wobei die Strukturhöhe (H) des Linienmusters 5 µm, 10 µm, 20 µm, 40 µm, 80 µm, 100 µm, 120 µm, 140 µm oder 180 µm beträgt.

Erfindungsgemäß bereitgestellt wird auch ein Rotorblatt gemäß der vorliegenden Erfindung, wobei der Durchmesser der Punkte des Punktmusters 20 µm, 40 µm, 80 µm, 100 µm, 120 µm, 140 µm oder 180 µm beträgt.

In einer weiteren bevorzugten Ausführungsform weist das Punkt- oder Linienmuster eine Periodizität P mit Abständen in einem Bereich von 1 bis 1000 µm, 10 bis 900, insbesondere 10 bis 300 µm, vorzugsweise 10 bis 200 µm, z.B. von 20 µm, 40 µm, 80 µm, 100 µm, 120 µm, 140 µm oder 180 µm auf.

In einer weiteren bevorzugten Ausführungsform weist das Rotorblatt eine Strukturhöhe des Linienmusters in einem Bereich von 1 bis 1000 µm, 10 bis 900 µm, insbesondere 10 bis 300 µm, vorzugsweise 10 bis 200 µm, z.B. von 20 µm, 40 µm, 80 µm, 100 µm, 120 µm, 140 µm oder 180 µm auf.

Nach einer weiteren bevorzugten Ausführungsform der vorliegenden Erfindung beträgt der Durchmesser der Punkte des Punktmusters 1 bis 1000 µm, 10 bis 900 µm, insbesondere 10 bis 200 µm, z.B. 20 µm, 40 µm, 80 µm, 100 µm, 120 µm, 140 µm oder 180 µm.

Die vorliegende Erfindung stellt auch einen Rotor bereit, umfassend mindestens ein Rotorblatt, vorzugsweise zwei oder drei Rotorblätter, gemäß der vorliegenden Erfindung.

Die Erfindung betrifft auch ein Gerät, insbesondere eine Windenergieanlage oder ein Fluggerät, insbesondere ein Flugzeug oder Modellflugzeug, umfassend mindestens einen Rotor gemäß der vorliegenden Erfindung.

Die Erfindung betrifft auch ein Verfahren zur Herstellung eines beschichteten Rotorblatts gemäß der vorliegenden Erfindung, wobei eine gefrierpunktserniedrigende Anti-Eis-Beschichtung mit einer Dicke von 10 bis 500 nm in einem Niederdruckplasmaverfahren auf die Oberfläche des Rotorblatts aufgebracht und eine Strukturierung, insbesondere Oberflächenstrukturierung, im Mikrometerbereich in die Oberfläche eingebracht wird.

Erfindungsgemäß bereitgestellt wird auch ein Verfahren zur Herstellung eines beschichteten Rotorblatts gemäß der vorliegenden Erfindung, wobei eine gefrierpunktserniedrigende Anti-Eis-Beschichtung mit einer Dicke von 10 bis 200 nm, enthaltend a) 15 bis 75 Atom-% Fluor und b) 25 bis 85 Atom-% weitere Komponenten (jeweils gemäß XPS-Analyse) (jeweils bezogen auf Gesamt-Atom-% der Anti-Eis-Beschichtung) in einem Niederdruckplasmaverfahren auf die Oberfläche des Rotorblatts aufgebracht und eine Strukturierung, insbesondere Oberflächenstrukturierung im Mikrometerbereich in die Oberfläche insbesondere im Punkt- oder Linienmuster, in die Oberfläche eingebracht wird.

Die vorliegende Erfindung betrifft in einer bevorzugten Ausführungsform ein Verfahren zur Herstellung eines beschichteten Rotorblatts gemäß der vorliegenden Erfindung, wobei eine gefrierpunktserniedrigende Anti-Eis-Beschichtung mit einer Dicke von 50 bis 500 nm enthaltend 25 bis 29 Atom-% Silizium, 22 bis 45 Atom-% Sauerstoff und 26 bis 49 Atom-% Kohlenstoff (jeweils gemäß XPS-Analyse), vorzugsweise 29 Atom-% Silizium, 22 Atom-% Sauerstoff und 49 Atom-% Kohlenstoff (jeweils bestimmt gemäß XPS-Analyse) (jeweils bezogen auf Gesamt-Atom-% der Anti-Eis-Beschichtung) in einem Niederdruckplasmaverfahren auf die Oberfläche des Rotorblatts aufgebracht und eine Strukturierung, insbesondere eine Oberflächenstrukturierung im Mikrometerbereich in die Oberfläche eingebracht wird. In besonders bevorzugter Ausführungsform wird diese gefrierpunktserniedrigende Anti-Eis-Beschichtung mit einer Dicke von 50 bis 500 nm aus Hexamethyldisiloxan in einem Niederdruckplasmaverfahren auf die Oberfläche des Rotorblatts aufgebracht und eine Strukturierung im Mikrometerbereich in die Oberfläche eingebracht.

Sofern in einer weiteren Ausführungsform die Anti-Eis-Beschichtung, insbesondere die fluorhaltige oder silikonartige Beschichtung, nicht unmittelbar auf das Rotorblatt, sondern auf einem Träger vorliegt und mittels des Trägers auf das Rotorblatt aufgebracht wird, wird die Anti-Eis-Beschichtung zunächst auf den Träger aufgebracht, dort die Strukturierung eingebracht und anschließend die so geträgerte Anti-Eis-Beschichtung auf das Rotorblatt aufgebracht.

Erfindungsgemäß bereitgestellt wird auch ein Verfahren zur Herstellung eines beschichteten Rotorblatts gemäß der vorliegenden Erfindung, wobei ein beschichteter Träger, insbesondere eine beschichtete Folie, vorzugsweise Kunststofffolie, umfassend eine gefrierpunktserniedrigende Anti-Eis-Beschichtung a) mit einer Dicke von 50 bis 500 nm, enthaltend 25 bis 29 Atom-% Silizium, 22 bis 45Atom-% Sauerstoff und 26 bis 49Atom-% Kohlenstoff (jeweils gemäß XPS-Analyse), vorzugsweise 29 Atom-% Silizium, 22 Atom-% Sauerstoff und 49 Atom-% Kohlenstoff (jeweils bestimmt gemäß XPS-Analyse) (jeweils bezogen auf Gesamt-Atom-% der Anti-Eis-Beschichtung) oder b) mit einer Dicke 10 bis 200 nm, enthaltend a) 15 bis 75 Atom-% Fluor und b) 25 bis 85 Atom-% weitere Komponenten (jeweils gemäß XPS-Analyse) (jeweils bezogen auf Gesamt-Atom-% der Anti-Eis-Beschichtung) und jeweils mit einer Strukturierung, insbesondere in Form eines Punkt- oder Linienmusters, insbesondere umfassend eine Anti-Eis-Beschichtung der vorliegenden Erfindung, auf einer Oberfläche, insbesondere einer Außenoberfläche eines Rotorblattes aufgebracht und fixiert, z. B. aufgeklebt, wird.

Erfindungsgemäß bereitgestellt wird auch eine Verwendung einer Beschichtung, insbesondere einer auf einem Träger angeordneten Beschichtung, gemäß der vorliegenden Erfindung, enthaltend a) eine fluorhaltige Beschichtung umfassend 15 bis 75 Atom-% Fluor und b) 25 bis 85 Atom-% weitere Komponenten oder b) eine silikonartige Beschichtung, also eine Si-, O- und C-haltige Beschichtung , wobei diese Si-, O- und C-haltige Beschichtung vorzugsweise 25 bis 29 Atom-%, bevorzugt 29 Atom-% Silizium, vorzugsweise 22 bis 45 Atom-%, vorzugsweise 42 Atom-% Sauerstoff, und vorzugsweise 26 bis 49 Atom-%, insbesondere 49 Atom-% Kohlenstoff enthält (jeweils gemäß XPS-Analyse) (jeweils bezogen auf Gesamt-Atom-% der Anti-Eis-Beschichtung) für die Beschichtung mindestens einer Oberfläche eines Rotorblatts, insbesondere zur Verhinderung einer Eisbildung, Eishaftung oder beidem.

Erfindungsgemäß bereitgestellt wird auch eine Verwendung (i) einer Beschichtung enthaltend 15 bis 75 Atom-% Fluor und 25 bis 85 Atom-% weitere Komponenten (jeweils bestimmt gemäß XPS-Analyse) oder (ii) einer Si-, O- und C-haltigen Beschichtung, wobei diese Si-, O- und C-haltige Beschichtung vorzugsweise 25 bis 29 Atom-%, bevorzugt 29 Atom-% Silizium, vorzugsweise 22 bis 45 Atom-%, vorzugsweise 42 Atom-% Sauerstoff, und vorzugsweise 26 bis 49 Atom-%, insbesondere 49 Atom-% Kohlenstoff enthält (jeweils gemäß XPS-Analyse) (jeweils bezogen auf Gesamt-Atom-% der Anti-Eis-Beschichtung), für die Beschichtung mindestens einer Oberfläche eines Rotorblatts zur Verminderung der Eisadhäsionskraft zu der mindestens einen Oberfläche des Rotorblatts.

Erfindungsgemäß bereitgestellt wird auch eine Verwendung (i) einer Beschichtung enthaltend 15 bis 75 Atom-% Fluor und 25 bis 85 Atom-% weitere Komponenten (jeweils bestimmt gemäß XPS-Analyse) oder (ii) einer Si-, O- und C-haltigen Beschichtung, wobei diese Si-, O- und C-haltige Beschichtung vorzugsweise 25 bis 29 Atom-%, bevorzugt 29 Atom-% Silizium, vorzugsweise 22 bis 45 Atom-%, vorzugsweise 42 Atom-% Sauerstoff, und vorzugsweise 26 bis 49 Atom-%, insbesondere 49 Atom-% Kohlenstoff enthält (jeweils gemäß XPS-Analyse) (jeweils bezogen auf Gesamt-Atom-% der Anti-Eis-Beschichtung), für die Beschichtung mindestens einer Oberfläche eines Rotorblatts zur Gefrierpunktserniedrigung.

Erfindungsgemäß bereitgestellt wird auch eine Kunststofffolie, umfassend eine gefrierpunktserniedrigende Anti-Eis-Beschichtung, nämlich eine fluorhaltige Beschichtung, einer Dicke von 10 bis 200 nm, enthaltend a) 15 bis 75 Atom-% Fluor und b) 25 bis 85 Atom-% weitere Komponenten (jeweils gemäß XPS-Analyse) (jeweils bezogen auf Gesamt-Atom-% der Anti-Eis-Beschichtung) oder eine silikonartige Beschichtung, also eine Si-, O- und C-haltige Beschichtung einer Dicke von 50 bis 500 nm, wobei diese Si-, O- und C-haltige Beschichtung vorzugsweise 25 bis 29 Atom-%, bevorzugt 29 Atom-%, Silizium, vorzugsweise 22 bis 45 Atom-%, vorzugsweise 42 Atom-%, Sauerstoff und vorzugsweise 26 bis 49 Atom-%, insbesondere 49 Atom-%, Kohlenstoff enthält und wobei diese Beschichtungen eine Strukturierung, insbesondere in Form eines Punkt- oder Linienmusters, aufweisen.

Die vorliegende Erfindung sieht also vor, die Oberfläche eines Rotorblatts mit einer, optional geträgerten, Beschichtung zu versehen, welche einerseits eine Anhaftung von Eis reduziert, insbesondere verhindert, und andererseits den Gefrierpunkt von Wasser erniedrigt, so dass Wasser nicht oder erst später, das heißt bei einer noch tieferen Temperatur, auf der Oberfläche einfriert.

Ohne durch die Theorie gebunden sein zu wollen, ergibt sich der erfindungsgemäß besonders bevorzugte Gefrierpunktserniedrigungseffekt zum einen durch eine erfindungsgemäß bereitgestellte Topographie oder Strukturierung im Nanometerbereich in Kombination mit der quantitativen und qualitativen Definition der eingesetzten erfindungsgemäßen Beschichtung. Durch die Kombination dieser beiden technischen Aspekte wird - ohne durch die Theorie gebunden zu sein - das Gefrieren eines Tropfens hinausgezögert oder sogar verhindert. Insbesondere werden durch die erfindungsgemäß bestimmte geschaffene Rauheit der Beschichtung keine Kristallisationskeime der passenden Größe zur Eisbildung auf den Oberflächen erzeugt. Ein bestimmter Radius von modellhaften Oberflächen-Clustern wird nicht überschritten und die Eisbildung somit verhindert. Die genannte Topographie im Nanometerbereich ist stochastischer Natur und wird nicht durch eine Maske vorgegeben. Erfindungsgemäß bevorzugt wird diese Struktur im Nanometerbereich bereitgestellt durch die Durchführung eines Plasmabeschichtungsprozesses, insbesondere Niederdruckplasmabeschichtungsprozesses, vorzugsweise durch Ionenbeschuss und Polymerisierung. Die erfindungsgemäß ebenfalls beobachtete Haftungsverminderung wird, ohne durch die Theorie gebunden sein zu wollen, durch die Oberflächenstrukturierung im Mikrometerbereich verbessert. In besonders bevorzugter Ausführungsform beträgt die Rauheit Ra (mittlere Rauheit (Mittrauwert) auf einer Scanscala von 2 auf 2 µm (xy-Richtung) vorzugsweise 0,2 nm bis 22 nm.

Durch Auswahl verschiedener Prozessparameter wie der Art und Menge des eingesetzten Plasmagases, der Temperatur, dem Druck und der Behandlungszeit können sehr dünne Strukturen im Nanometerbereich, insbesondere nanostrukturierte Schichten, erzeugt werden. Diese Strukturen sind nur wenige Nanometer groß, haben aber einen Einfluss auf die Benetzungseigenschaften und damit auch auf die Eisbildungs- und Anti-Eis-Eigenschaften: Wird Wasser auf die Folienoberfläche gebracht, zieht es sich zu einem kugelförmigen Tropfen zusammen, der dann aufgrund der nur minimalen Wechselwirkung mit der Oberfläche von ihr abgestoßen wird.

Erfindungsgemäß bevorzugt führt die eingesetzte Beschichtung zu einer Gefrierpunktserniedrigung, insbesondere von mindestens 3 °C. Durch diesen Effekt des sogenannten "surface-induced pre-melting" schmilzt ein Eiskeim auf einer Beschichtung, insbesondere einer beschichteten Folie bei 0 °C und erst mindestens - 6 °C ist ein Gefrieren zu beobachten. Der bulk-Gefrierpunkt des Wassers wird also durch die Anwesenheit der Plasma-Beschichtung auf den Folien herabgesetzt und eine Vereisung somit erschwert.

Gemäß der vorliegenden Erfindung ist also vorgesehen, dass das Rotorblatt eine Oberfläche, insbesondere Außenoberfläche, insbesondere die gesamte Außenoberfläche, mit einer Beschichtung aufweist, die Antieisadhäsionseigenschaften hat. Diese wird erfindungsgemäß auch als Anti-Eis-Beschichtung bezeichnet.

Im Zusammenhang mit der vorliegenden Erfindung wird unter Antieisadhäsionseigenschaften verstanden, dass die Eishaftung auf der Außenoberfläche des Rotorblatts sehr gering ist, das heißt, dass das Eis sich relativ leicht von dieser Oberfläche ablösen lässt.

Im Zusammenhang mit der vorliegenden Erfindung wird die Eisadhäsion durch einen Eisabzugstest bestimmt. Gemäß diesem Eisabzugstest wird Wasser, insbesondere ein Wassertropfen, auf der Oberfläche angefroren, für die die Eisadhäsion bestimmt werden soll. Im Wasser, insbesondere Wassertropfen, wird eine Kanüle mit eingefroren, an der man den gefrorenen Wassertropfen von der Oberfläche abziehen kann. Anschließend wird der Tropfen von der Oberfläche senkrecht abgezogen und die aufgewendete Kraft gemessen. Aus dem Quotienten aus Kraft und Oberfläche (F/A, Kraft/Fläche) ergibt sich die Eisadhäsion.

Im Zusammenhang mit der vorliegenden Erfindung wird unter einer Strukturierung im Mikrometerbereich eine Strukturierung, insbesondere eine Oberflächenstrukturierung, insbesondere eine topografische Strukturierung, verstanden, deren Strukturen, z. B. Erhebungen oder Vertiefungen oder Abstände zwischen Erhebungen oder zwischen Vertiefungen, Abmessungen im Mikrometerbereich aufweisen, insbesondere Abmessungen von 1 bis 1000 µm, vorzugsweise 10 bis 900 µm, insbesondere 10 bis 300 µm, insbesondere 20 bis 300 µm aufweisen.

Derartige Erhebungen können in Form von Punkten oder Linien vorliegen. Die Abmessungen der Strukturen können in jeder Raumrichtung vorliegen, das heißt Höhe, Breite, Länge oder zwei oder drei der genannten Ausrichtungen der Struktur betreffen.

Im Zusammenhang mit der vorliegenden Erfindung wird unter einer Strukturierung im Nanometerbereich eine Strukturierung, insbesondere eine Oberflächenstrukturierung, insbesondere eine topografische Strukturierung, verstanden, deren Strukturen, z. B. Erhebungen oder Vertiefungen oder Abstände zwischen Erhebungen oder zwischen Vertiefungen, Abmessungen im Nanometerbereich aufweisen, insbesondere Abmessungen von 0,01 bis 800 nm, insbesondere 0,1 bis 700 nm, insbesondere 0,1 bis 500 nm, insbesondere 0,1 bis 100 nm, insbesondere 0,1 bis 50 nm, insbesondere 0,1 bis 40 nm, insbesondere 0,1 bis 30 nm, insbesondere 0,02 bis 50 nm, insbesondere 0,02 bis 40 nm, insbesondere 0,02 bis 30 nm, insbesondere 0,02 bis 20 nm aufweisen.

Die erfindungsgemäß bevorzugt vorgesehene Anti-Eis-Beschichtung zeichnet sich in bevorzugter Ausführungsform durch die vorgesehene Strukturierung im Mikrometerbereich, insbesondere eine zwei- oder dreidimensionale Strukturierung, aus.

Erfindungsgemäß bevorzugt wird insbesondere durch die vorgesehene Strukturierung in Form eines Musters, insbesondere eines Punkt- und Linienmusters, erreicht, dass ein Zusammenfließen, d.h. eine Koaleszenz, der sich an der beschichteten Oberfläche bildenden oder abscheidenden Tropfen zu größeren Einheiten vermieden wird.

In bevorzugter Ausführungsform kann die Strukturierung durch die Art des Materials, insbesondere die Hydrophilität und/oder Eisadhäsion, und/oder eine geometrische Reliefausgestaltung, insbesondere eine topographische Strukturierung, bereitgestellt werden. Die vorgesehene Strukturierung, insbesondere topographische Strukturierung, kann in einer bevorzugten Ausführungsform eine strukturiert heterogene Oberfläche bereitstellen, insbesondere eine solche, die in definierten Bereichen, die durch das Linien- oder Punktmuster vorgegeben ist, eine schlechtere oder bessere Eishaftung als in anderen durch das Muster definierten Bereichen bewirkt, so dass es zu einer unterschiedlichen Eishaftung auf der Oberfläche kommt, welche zu Bruchstellen und damit zu einem weniger stabilen Eisanhaftungsprozess kommt. Dementsprechend kann beispielsweise das Linienmuster oder das Punktmuster eine schlechtere Eishaftung auf den Linien oder Punkten der Oberfläche bewirken. In einer bevorzugten Ausführungsform kann das Linien- oder Punktmuster aus hydrophilen Linien oder Punkten bestehen, und so eine bessere Eishaftung auf die Linien oder Punkte bewirken; dies führt auf der hydrophob beschichteten Oberfläche zu einem gezielten Eiskristallwachstum in den hydrophilen Bereichen mit der Folge, dass die nicht verbundenen Eiskristalle so leichter abreißen.

In einer weiteren Ausführungsform kann das Punkt- oder Linienmuster hydrophober als die Anti-Eis-Beschichtung sein und führt so ebenfalls zu einer heterogenen Oberflächenstrukturierung.

Im Zusammenhang mit der vorliegenden Erfindung wird unter einer Strukturierung im Mikrometerbereich eine Strukturierung, insbesondere eine Oberflächenstrukturierung, insbesondere eine topografische Strukturierung, verstanden, deren Strukturen, z. B. Erhebungen oder Vertiefungen oder Abstände zwischen Erhebungen oder zwischen Vertiefungen, Abmessungen im Mikrometerbereich aufweisen, insbesondere Abmessungen von 1 bis 1000 µm, vorzugsweise 10 bis 900 µm, insbesondere 10 bis 300 µm, insbesondere 10 bis 200 µm, insbesondere 20 bis 300 µm aufweisen.

Derartige Erhebungen können in Form von Punkten oder Linien vorliegen. Die Abmessungen der Strukturen können in jeder Raumrichtung vorliegen, das heißt Höhe, Breite, Länge oder zwei oder drei der genannten Ausrichtungen der Struktur betreffen.

Im Zusammenhang mit der vorliegenden Erfindung wird unter einer Strukturierung im Nanometerbereich eine Strukturierung, insbesondere eine Oberflächenstrukturierung, insbesondere eine topografische Strukturierung, verstanden, deren Strukturen, z. B. Erhebungen oder Vertiefungen oder Abstände zwischen Erhebungen oder zwischen Vertiefungen, Abmessungen im Nanometerbereich aufweisen, insbesondere Abmessungen von 0,01 bis 800 nm, insbesondere 0,1 bis 700 nm, insbesondere 0,1 bis 500 nm, insbesondere 0,1 bis 100 nm, insbesondere 0,1 bis 50 nm, insbesondere 0,1 bis 40 nm, insbesondere 0,1 bis 30 nm, insbesondere 0,02 bis 50 nm, insbesondere 0,02 bis 40 nm, insbesondere 0,02 bis 30 nm, insbesondere 0,02 bis 20 nm aufweisen.

In besonders bevorzugter Ausführungsform bedeutet eine Strukturierung, insbesondere topographische Strukturierung, insbesondere im Mikrometerbereich, dass die Beschichtung an ihrer Oberfläche eine Struktur, insbesondere im Mikrometerbereich, erkennen lässt, beispielsweise eine dreidimensionale Struktur, insbesondere in Form von Vertiefungen und/oder Erhöhungen, insbesondere in Linienform oder in Punktform. In bevorzugter Ausführungsform ist die dreidimensionale Strukturierung zusätzlich durch definierte Bereiche unterschiedlicher Hydrophilie und/oder Hydrophobie beziehungsweise Eishaftung ausgezeichnet. Die Strukturierung kann auch eine zweidimensionale Strukturierung darstellen, wobei die Struktur zum Beispiel allein durch eine unterschiedliche Oberflächenbeschaffenheit bewirkt wird, beispielsweise durch definierte Bereiche unterschiedlicher Hydrophilie beziehungsweise Hydrophobie und/oder unterschiedlicher Eishaftung, vorzugsweise ebenfalls im Punkt- oder Linienmuster.

Die erfindungsgemäß bevorzugte Vorgehensweise, eine, vorzugsweise hydrophobe und oleophobe, Beschichtung einer Oberfläche des Rotorblatts in Kombination mit einer Strukturierung, insbesondere topografischen Strukturierung, insbesondere einem Punkt- oder Linienmuster, vorzusehen, bewirkt eine verminderte Wasseranhaftung, eine verminderte Eisbildung und/oder eine verminderte Eishaftung. Die erfindungsgemäß vorgesehene Anti-Eis-Beschichtung bewirkt eine reduzierte Eisadhäsion, das heißt, Eis lässt sich weitgehend rückstandsfrei sprengen.

In besonders bevorzugter Ausführungsform ist ein Strukturierungsverfahren zum Bereitstellen einer Strukturierung, beispielsweise ein Prägeverfahren, vorgesehen. In dieser bevorzugten Ausführungsform wird die zu beschichtende Oberfläche zunächst strukturiert, insbesondere geprägt, und anschließend mit der vorgesehenen Anti-Eis-Beschichtung beschichtet. Alternativ wird die Oberfläche zunächst mit der Anti-Eis-Beschichtung beschichtet und anschließend strukturiert, insbesondere geprägt. In einer weiteren Ausführungsform kann vorgesehen sein, die zu beschichtende Oberfläche nur partial zu beschichten, beispielsweise diese mit mindestens einer Maske abzudecken und eine Beschichtung durchzuführen, so dass in diesem Fall das Strukturierungsverfahren, nämlich das Verwenden einer Maske beim Beschichten, gleichzeitig mit dem Beschichten selbst einhergeht.

In einer besonders bevorzugten Ausführungsform enthält die fluorhaltige Anti-Eis-Beschichtung 15 bis 75 Atom-% Fluor, insbesondere 15 bis 60 Atom-% Fluor, vorzugsweise 20 bis 55 Atom-%, vorzugsweise 25 bis 50 Atom-% Fluor, insbesondere 30 bis 50 Atom-% Fluor.

In einer weiteren bevorzugten Ausführungsform enthält die fluorhaltige Anti-Eis-Beschichtung 25 bis 85 Atom-%, vorzugsweise 40 bis 85 Atom-%, vorzugsweise 45 bis 80 Atom-%, vorzugsweise 50 bis 75 Atom-%, insbesondere 50 bis 70 Atom-% weiterer Komponenten.

Vorzugsweise enthält die fluorhaltige Beschichtung als weitere Komponente 0,1 bis 4,9 Atom-% Sauerstoff. Vorzugsweise enthält die fluorhaltige Beschichtung als weitere Komponente Wasserstoff. Vorzugsweise enthält die fluorhaltige Beschichtung als weitere Komponente Kohlenstoff. Vorzugsweise enthält die fluorhaltige Beschichtung als weitere Komponenten Sauerstoff, Wasserstoff und Kohlenstoff. Vorzugsweise enthält die fluorhaltige Beschichtung als weitere Komponenten Sauerstoff und Wasserstoff. Vorzugsweise enthält die fluorhaltige Beschichtung als weitere Komponenten Kohlenstoff und Wasserstoff.

In einer besonders bevorzugten Ausführungsform enthält die fluorhaltige Beschichtung 15 bis 75 Atom-%, vorzugsweise 15 bis 60 Atom-%, vorzugsweise 20 bis 55 Atom-%, vorzugsweise 25 bis 50 Atom-%, Fluor und 25 bis 85 Atom-%, vorzugsweise 40 bis 85 Atom-%, vorzugsweise 45 bis 80 Atom-%, vorzugsweise 50 bis 75 Atom-%, Kohlenstoff und Wasserstoff.

In einer besonders bevorzugten Ausführungsform ist vorgesehen, dass das Rotorblatt die Beschichtung unmittelbar auf einer Oberfläche, insbesondere Außenoberfläche, aufweist.

In einer weiteren bevorzugten Ausführungsform ist vorgesehen, dass das Rotorblatt eine geträgerte Beschichtung der erfindungsgemäßen Art aufweist, insbesondere, dass die Beschichtung auf einem auf einer Oberfläche, insbesondere Außenoberfläche, des Rotorblatts aufgebrachten Träger vorliegt.

In einer weiteren bevorzugten Ausführungsform ist vorgesehen, dass das Rotorblatt eine geträgerte Beschichtung der erfindungsgemäßen Art aufweist, d.h. dass die Beschichtung mittels eines Trägers auf einer Oberfläche, insbesondere Außenoberfläche, des Rotorblatts aufgebracht ist.

In besonders bevorzugter Ausführungsform kann der Träger eine Dicke von 0,003 bis 0,300 mm, insbesondere 0,003 bis 0,05 mm, insbesondere 0,150 bis 0,300 mm, insbesondere 0,150 mm oder 0,300 mm aufweisen.

In besonders bevorzugter Ausführungsform ist dieser Träger ein Träger aus leitfähigen Polymeren, insbesondere intrinsisch leitfähigen Polymeren (ICP, Inherent Conductive Polymers), leitfähig beschichteten Polymeren oder extrinsisch leitfähigen, also gefüllten, Polymeren, gefüllt z.B. mit Carbon Black, Carbon-Nanotubes, Graphen, Metallfasern oder Ruß, oder ein Träger aus Lack oder Kunststoff, insbesondere Polyurethan (PU), Polyamid, Polyimid, Polycarbonat, PET (Polyethylenterephthalat), PMMA (Polymethylmethacrylat), PE (Polyethylen), PP (Polypropylen), ABS (Acrylnitril-Butadien-Styrol) oder PVC (Polyvinylchlorid).

In einer erfindungsgemäß besonders bevorzugten Ausführungsform ist der Träger für die Beschichtung eine Folie, insbesondere aus leitfähigen Polymeren, insbesondere intrinsisch leitfähigen Polymeren (ICP, inherent conductive polymeres), leitfähig beschichteten Polymeren oder extrinsisch leitfähigen, also gefüllten, Polymeren, gefüllt z.B. mit Carbon Black, Carbon-Nanotubes, Graphen, Metallfasern oder Ruß, oder ein Träger aus Lack oder Kunststoff, insbesondere eine Kunststofffolie aus PU, Polyamid, Polyimid, Polycarbonat, PMMA, PET, PE, PP, ABS und/oder PVC. Vorzugsweise ist die Kunststofffolie eine selbstklebende Kunststofffolie. Die erfindungsgemäß beschichteten Träger, insbesondere Kunststofffolien, können auf die Oberfläche des zu beschichteten Rotorblatts aufgebracht werden, zum Beispiel geklebt oder unter Temperatur auflaminiert werden. Dies hat den Vorteil, dass die Folien auf den Oberflächen des Rotorblatts in einfacher Art und Weise ausgetauscht werden können, wenn sie einem großen Verschleiß ausgesetzt worden sind. Erfindungsgemäß werden dazu die verschlissenen Folien entfernt und durch neue, beschichtete Folien ersetzt.

In einer weiteren bevorzugten Ausführungsform kann der Träger auch ein Lackfilm, eine Lackfolie oder eine Lackschicht sein, insbesondere solche, die eine Dicke von 0,003 bis 0,300 mm, insbesondere 0,003 bis 0,050 mm, insbesondere 0,150 bis 0,300 mm, insbesondere 0,150 mm oder 0,300 mm, aufweisen.

In besonders bevorzugter Ausführungsform kann die Oberfläche des Rotorblatts eine Kunststoffoberfläche, eine Lackoberfläche, eine Metalloberfläche oder eine aus Verbundstoffen aufgebaute Oberfläche sein. Eine Kunststoffoberfläche eines Rotorblatts kann beispielsweise aus PU, Polyamid, Polyimid, Polycarbonat, PET, PE, PP, ABS oder PVC aufgebaut sein. Eine Metalloberfläche kann beispielsweise aus Edelstahl, Aluminium und/oder Magnesium aufgebaut sein. Eine Lackoberfläche kann beispielsweise ein Lackfilm oder eine Lackschicht sein.

In besonders bevorzugter Ausführungsform ist dieser Träger ein Träger aus Lack oder Kunststoff, insbesondere Polyurethan (PU), Polyamid, Polyimid, Polycarbonat, PMMA (Polymethylmethacrylat), ICP, PET, PE (Polyethylen), ABS (Acrylnitril-Butadien-Styrol) oder PVC (Polyvinylchlorid).

In einer erfindungsgemäß besonders bevorzugten Ausführungsform ist der Träger für die Beschichtung eine Folie, insbesondere aus Kunststoff, insbesondere eine Kunststofffolie aus PU, Polyamid, Polyimid, Polycarbonat, PMMA (Polymethylmethacrylat), PET, PE, ABS und/oder PVC. Vorzugsweise ist die Kunststofffolie eine selbstklebende Kunststofffolie. Die erfindungsgemäß beschichteten Träger, insbesondere Kunststofffolien, können auf die Oberfläche des zu beschichtenden Rotorblatts aufgebracht werden, zum Beispiel geklebt oder unter Temperatur auflaminiert werden. Dies hat den Vorteil, dass die Folien auf den Oberflächen des Rotorblatts in einfacher Art und Weise ausgetauscht werden können, wenn sie einem großen Verschleiß ausgesetzt worden sind. Erfindungsgemäß werden dazu die Verschlissenen Folien entfernt und durch neue, beschichtete Folien ersetzt.

In einer weiteren bevorzugten Ausführungsform kann der Träger auch ein Lackfilm, eine Lackfolie oder eine Lackschicht sein, insbesondere eine solche, die eine Dicke von 0,003 bis 0,050 mm aufweist.

In besonders bevorzugter Ausführungsform kann die Oberfläche des zu beschichtenden Rotorblatts eine Kunststoffoberfläche, eine Lackoberfläche, eine Metalloberfläche oder eine aus Verbundstoffen aufgebaute Oberfläche sein. Eine Kunststoffoberfläche eines Rotorblatts kann beispielsweise aus PU, Polyamid, Polyimid, Polycarbonat, PET, PE, ABS oder PVC aufgebaut sein. In bevorzugter Ausführungsform ist ein Rotorblatt aus Glas- oder Kohlefaser verstärkten Kunststoffen aufgebaut. Eine Metalloberfläche kann beispielsweise aus Edelstahl, Kupfer, Aluminium und/oder Magnesium aufgebaut sein. Eine Lackoberfläche kann beispielsweise ein Lackfilm oder eine Lackschicht sein.

In besonders bevorzugter Ausführungsform weist sich die erfindungsgemäß bevorzugt auf einer Oberfläche des Rotorblatts unmittelbar oder mittels eines Trägers aufgebrachte Anti-Eis-Beschichtung durch eine Eis-Adhäsion, hier auch als Eishaftung bezeichnet, von ≤ 200 kPa, vorzugsweise < 200 kPa, vorzugsweise ≤ 150 kPa, insbesondere ≤ 95 kPa, insbesondere < 95 kPa aus.

In besonders bevorzugter Ausführungsform weist die Beschichtung eine maximale Dicke von ≤ 200 nm, vorzugsweise < 200 nm, vorzugsweise ≤ 150 nm, vorzugsweise ≤ 100 nm, vorzugsweise ≤ 50 nm, insbesondere < 50 nm auf.

In einer weiteren bevorzugten Ausführungsform weist die Anti-Eis-Beschichtung eine minimale Dicke von ≥ 5 nm, insbesondere ≥ 10 nm, insbesondere ≥ 20 nm, insbesondere ≥ 25 nm auf.

In besonders bevorzugter Ausführungsform liegt der Wasserkontaktwinkel, das heißt der Vorrück- und Rückzugskontaktwinkel von Wasser auf der Anti-Eis-Beschichtung bei jeweils > 80°, vorzugsweise liegen beide Winkel bei > 100°.

Im Zusammenhang mit der vorliegenden Erfindung wird der Wasserkontaktwinkel und die Oberflächenenergie vorzugsweise bestimmt gemäß a) Müller, M. & Oehr, C., Comments on 'An Essay on Contact Angle Measurements' by Strobel and Lyons. Plasma Processes and Polymers 8, 19-24 (2011), b) Gao, L. & McCarthy, T. J. How Wenzel and Cassie Were Wrong. Langmuir 23, 3762-3765 (2007), c) Blake, T. D. The physics of moving wetting lines. Journal of Colloid and Interface Science 299, 1-13 (2006) oder d) Morra, M., Occhiello, E. & Garbassi, F. Knowledge about polymer surfaces from contact angle measurements. Advances in Colloid and Interface Science 32, 79-116 (1990).

Die XPS-Analyse wird vorzugsweise durchgeführt gemäß "Surface Analysis by Auger and X-Ray Photoelectron Spectroscopy", Edited by David Briggs and John T. Grant (2003), ISBN 1-901019-04-7, Published in association with IM Publications.

In besonders bevorzugter Ausführungsform weist die Anti-Eis-Beschichtung eine Oberflächenenergie von < 30 mJ/m, insbesondere ≤ 30 mJ/m, insbesondere ≤ 21 mJ/m, insbesondere < 21 mJ/m auf.

In besonders bevorzugter Ausführungsform ist das Rotorblatt dadurch gekennzeichnet, dass die entweder unmittelbar auf der Oberfläche oder mittels eines Trägers aufgebrachte Beschichtung mittels eines Niederdruckplasmaverfahrens auf die Oberfläche des Rotorblatts oder des Trägers aufgebracht wurde. Derartige Verfahren sind bekannt und zum Beispiel von Haupt et al. in Plasma Process. Polym., (2008), 5, 33-43, und in Vakuum in Forschung und Praxis, 17 (2005), Nr. 6, 329-335, beschrieben. Derartige Verfahren werden auch in der WO 2007/012472 A1 und der DE 10 2005 034 764 A1 beschrieben.

Erfindungsgemäß ist es in einer bevorzugten Ausführungsform vorgesehen, dass das zu beschichtende Rotorblatt oder der zu beschichtende Träger in einer Gasatmosphäre mit Niedrigdruck, zum Beispiel bei einem Druck von < 1 mbar, vorliegt und Prozessgase, beispielsweise Ar, N₂ oder O₂, sowie entsprechendes Polymerausgangsmaterial für die Herstellung fluorhaltiger Beschichtungen, zum Beispiel Monomergase wie Trifluormethan CHF₃, Tetrafluormethan CF₄, Mischungen aus CF₄ und H₂, Hexafluorpropan C₃F₆ oder Octafluorcyclobutan C₄F₈ zur Beschichtung eingesetzt werden. Für die Herstellung silikonartiger Beschichtungen wird vorzugsweise Hexamethyldisiloxan (HMDSO) als Ausgangssubstanz eingesetzt. Durch Zünden eines Hochfrequenzplasmas, zum Beispiel bei 13,56 MHz, zwischen zwei Elektroden werden die Gasmoleküle ionisiert, fragmentiert und aktiviert, so dass ein Plasma entsteht. In der Plasmaphase beziehungsweise auf der zu beschichtenden Oberfläche finden nun chemische Reaktionen statt, die zu einem kovalenten Binden der Plasmapolymerprodukte an der zu beschichtenden Oberfläche führen.

In einer bevorzugten Ausführungsform kann die Beschichtung des Rotorblatts mit Antieisadhäsionseigenschaft mittels eines Niederdruck-Plasmaverfahrens hergestellt sein, wobei mittels einer Hochfrequenzentladung zwischen mindestens zwei Elektroden aus Reaktivgas, welches zum Beispiel zyklische Fluorkohlenstoffverbindungen oder HMDSO enthält, ein Plasma erzeugt wird und polymere Fluor-Kohlenstoffschichten oder silikonartige Schichten auf dem elastischen Leitungselement aufgebracht werden. Vorzugsweise und in bevorzugter Ausführungsform werden für die fluorhaltigen Beschichtungen zyklische Fluorkohlenstoffverbindungen in Form von Perfluorocykloalkanen CₙF₂ₙ mit n = 3, 4 oder 5, zum Beispiel Perfluorocyklopropan C₃F₆ oder Perfluorocyklobutan C₄F₈ oder Perfluorocyklopentan C₅F₁₀ eingesetzt.

In besonders bevorzugter Ausführungsform ist weiterhin vorgesehen, dass die Oberflächenstrukturierung, insbesondere topographische Oberflächenstrukturierung, insbesondere das Punkt- oder Linienmuster, durch ein Strukturierungsverfahren, zum Beispiel durch Prägen des Trägers, z. B. Folienprägung, insbesondere vor dem Beschichten aufgebracht wird. Die fertig geprägte Folie wird anschließend beschichtet. Erfindungsgemäß ist es auch möglich, den Träger, z. B. eine nicht geprägte Folie, teilweise zu beschichten und so zu strukturieren, zum Beispiel den Träger, z. B. die Folie, durch Verwendung von Masken während einer Beschichtung zu strukturieren und zu beschichten.

In bevorzugter Ausführungsform ist daher vorgesehen, das erfindungsgemäße Punkt- oder Linienmuster durch Folienprägen aufzubringen.

In einer weiteren bevorzugten Ausführungsform ist vorgesehen, das Punkt- oder Linienmuster auf ungeprägte Träger, insbesondere Folien, durch Verwendung von Masken beim Beschichten aufzubringen, so dass gleichzeitig eine Strukturierung und Beschichtung stattfindet.

In besonders bevorzugter Ausführungsform kann im Falle der Verwendung von geträgerten Beschichtungen, insbesondere foliengeträgerten Beschichtungen, vorgesehen sein, die Folien kontinuierlich, zum Beispiel rollenweise, zum Beispiel von Rolle zu Rolle, oder im Batchverfahren zu beschichten.

Sofern das Rotorblatt direkt beschichtet wird, geschieht dies in bevorzugter Ausführungsform im Batchverfahren.

Erfindungsgemäß ist es auch möglich, das Rotorblatt unmittelbar vor der Benutzung zu beschichten. Dadurch ergibt sich vorteilhafterweise eine besonders fehlerfreie und naturgemäß unbenutzte Oberflächenbeschichtung ohne Beschädigung der Schicht durch beispielsweise Kratzer.

Die vorliegende Erfindung betrifft auch Verfahren zur Herstellung des erfindungsgemäßen Rotorblatts.

Die Erfindung betrifft auch ein Verfahren zur Herstellung eines beschichteten Rotorblatts gemäß der vorliegenden Erfindung, wobei eine, vorzugsweise gefrierpunktserniedrigende, Anti-Eis-Beschichtung mit einer Dicke von bis zu 500 nm, bevorzugt von 10 bis 200 nm in einem Niederdruckplasmaverfahren auf die Oberfläche des Rotorblatts aufgebracht und eine Strukturierung, insbesondere Oberflächenstrukturierung, im Mikrometerbereich in die Oberfläche eingebracht wird.

Die vorliegende Erfindung betrifft in einer bevorzugten Ausführungsform ein Verfahren zur Herstellung eines beschichteten Rotorblatts gemäß der vorliegenden Erfindung, wobei eine, vorzugsweise gefrierpunktserniedrigende, Anti-Eis-Beschichtung mit einer Dicke von bis zu 500 nm, bevorzugt von 10 bis 200 nm enthaltend 25 bis 29 Atom-% Silizium, 22 bis 45 Atom-% Sauerstoff und 26 bis 49 Atom-% Kohlenstoff (jeweils gemäß XPS-Analyse), vorzugsweise 29 Atom-% Silizium, 22 Atom-% Sauerstoff und 49 Atom-% Kohlenstoff (jeweils bestimmt gemäß XPS-Analyse) (jeweils bezogen auf Gesamt-Atom-% der Anti-Eis-Beschichtung) in einem Niederdruckplasmaverfahren auf die Oberfläche des Rotorblatts aufgebracht und eine Strukturierung, insbesondere eine Oberflächenstrukturierung im Mikrometerbereich in die Oberfläche eingebracht wird. In besonders bevorzugter Ausführungsform wird diese, vorzugsweise gefrierpunktserniedrigende, Anti-Eis-Beschichtung mit einer Dicke von bis zu 500 nm, bevorzugt von 10 bis 200 nm aus Hexamethyldisiloxan in einem Niederdruckplasmaverfahren auf die Oberfläche des Rotorblatts aufgebracht und eine Strukturierung im Mikrometerbereich in die Oberfläche eingebracht.

Sofern in einer weiteren Ausführungsform die Anti-Eis-Beschichtung, insbesondere die fluorhaltige oder silikonartige Beschichtung, nicht unmittelbar auf das Rotorblatt, sondern auf einem Träger vorliegt und mittels eines Trägers auf einem Rotorblatt aufgebracht wird, wird die Anti-Eis-Beschichtung zunächst auf den Träger aufgebracht, dort die Strukturierung eingebracht und anschließend die so geträgerte Anti-Eis-Beschichtung auf das Rotorblatt aufgebracht.

Erfindungsgemäß bereitgestellt wird auch ein Verfahren zur Herstellung eines beschichteten Rotorblatts gemäß der vorliegenden Erfindung, wobei ein beschichteter Träger, insbesondere eine beschichtete Folie, vorzugsweise Kunststofffolie, umfassend eine, vorzugsweise gefrierpunktserniedrigende, Anti-Eis-Beschichtung a) mit einer Dicke von 10 bis 200 nm, enthaltend 25 bis 29 Atom-% Silizium, 22 bis 45 Atom-% Sauerstoff und 26 bis 49 Atom-% Kohlenstoff (jeweils gemäß XPS-Analyse), vorzugsweise 29 Atom-% Silizium, 22 Atom-% Sauerstoff und 49 Atom-% Kohlenstoff (jeweils bestimmt gemäß XPS-Analyse) (jeweils bezogen auf Gesamt-Atom-% der Anti-Eis-Beschichtung) oder b) mit einer Dicke 10 bis 200 nm, enthaltend a) 15 bis 75 Atom-% Fluor und b) 25 bis 85 Atom-% weitere Komponenten (jeweils gemäß XPS-Analyse) (jeweils bezogen auf Gesamt-Atom-% der Anti-Eis-Beschichtung) und jeweils mit einer Strukturierung, insbesondere in Form eines Punkt- oder Linienmusters, insbesondere umfassend eine Anti-Eis-Beschichtung der vorliegenden Erfindung, auf einer Oberfläche, insbesondere einer Außenoberfläche eines Rotorblatts aufgebracht und fixiert, z. B. aufgeklebt, wird.

Insbesondere betrifft die Erfindung daher auch ein Verfahren zur Herstellung eines Rotorblatts der vorliegenden Erfindung, wobei eine Anti-Eis-Beschichtung einer Dicke von 10 bis 200 rim, enthaltend 15 bis 75 Atom-%, vorzugsweise 15 bis 60 Atom-%, Fluor und 25 bis 85 Atom-%, vorzugsweise 40 bis 85 Atom-%, weiterer Komponenten (jeweils XPS-Analyse und jeweils bezogen auf 100 Atom-% der gesamten Anti-Eisbeschichtung) mit einer Strukturierung, insbesondere topographischen Strukturierung, insbesondere einem Punkt- oder Linienmuster, geträgert oder ungeträgert auf einem Rotorblatt aufgebracht wird, insbesondere mittels eines Niederdruckplasmaverfahrens und eines Strukturierungsverfahrens zum Einbringen einer Strukturierung, insbesondere topographischen Strukturierung, insbesondere einer zwei- oder dreidimensionalen Oberflächenstrukturierung in die Oberfläche.

Erfindungsgemäß kann in einer besonders bevorzugten Ausführungsform vorgesehen sein, die Strukturierung getrennt von der Beschichtung bereitzustellen, das heißt beispielsweise einen Träger durch Prägen zu strukturieren und anschließend eine vollständige oder teilweise Beschichtung der strukturierten Oberfläche vorzunehmen. Erfindungsgemäß bevorzugt ist es auch, zunächst eine Beschichtung einer Oberfläche vorzunehmen und diese anschließend zu strukturieren, z. B. zu prägen. In einer weiteren Ausführungsform kann auch vorgesehen sein, die Strukturierung und Beschichtung gleichzeitig durchzuführen, beispielsweise indem die Oberfläche partial beschichtet wird, z. B. unter Verwendung von Masken beschichtet wird, das heißt dass bestimmte Bereiche der Oberfläche von der Beschichtung ausgenommen werden, so dass sich gleichzeitig eine Strukturierung und Beschichtung ausbildet.

Erfindungsgemäß bereitgestellt wird auch eine Verwendung einer fluorhaltigen Beschichtung, insbesondere einer auf einem Träger angeordneten Beschichtung, gemäß der vorliegenden Erfindung, enthaltend a) eine fluorhaltige Beschichtung umfassend 15 bis 75 Atom-% Fluor und b) 25 bis 85 Atom-% weitere Komponenten oder einer silikonartigen Beschichtung, also einer Si-, O- und C-haltigen Beschichtung, insbesondere einer auf einem Träger angeordneten Beschichtung, gemäß der vorliegenden Erfindung, wobei diese Si-, O- und C-haltige Beschichtung vorzugsweise 25 bis 29 Atom-%, bevorzugt 29 Atom-% Silizium, vorzugsweise 22 bis 45 Atom-%, vorzugsweise 42 Atom-% Sauerstoff, und vorzugsweise 26 bis 49 Atom-%, insbesondere 49 Atom-% Kohlenstoff enthält (jeweils gemäß XPS-Analyse) (jeweils bezogen auf Gesamt-Atom-% der Anti-Eis-Beschichtung) für die Beschichtung mindestens einer Oberfläche eines Rotorblatts, insbesondere zur Verhinderung einer Eisbildung, Eishaftung oder beidem.

Die vorliegende Erfindung betrifft auch die Verwendung einer Beschichtung, enthaltend, insbesondere bestehend aus, 15 bis 75 Atom-% Fluor, vorzugsweise 15 bis 60 Atom-% Fluor, und 25 bis 85 Atom-%, vorzugsweise 40 bis 85 Atom-%, weiterer Komponenten (jeweils gemäß XPS-Analyse und jeweils bezogen auf 100 Atom-% der Anti-Eisbeschichtung) für die Beschichtung, insbesondere für eine Oberflächen-strukturierte Beschichtung, mindestens einer Oberfläche eines Rotorblatts.

Weitere vorteilhafte Ausgestaltungen der Erfindung ergeben sich aus den Unteransprüchen.

Die vorliegende Erfindung wird anhand der nachfolgenden Beispiele und der dazugehörigen Figuren näher erläutert.

Die Figuren zeigen:
Figur 1 zeigt eine rastermikroskopische Aufnahme einer fluorhaltigen Plasmaschicht auf einer Polyurethanfolie mit Anti-Eis-Wirkung.
Figur 2 zeigt eine thermographische Aufnahme eines flüssigen Wassertropfens auf einer -30° C kalten, fluorhaltigen Plasmaschicht auf einer Polyurethanfolie.
Figur 3 zeigt eine mikroskopische Aufnahmen von gefrorenen Wassertröpfchen auf a) PTFE-, b) einer fluorhaltigen Plasmaschicht auf einer Polyurethanfolie mit Anti-Eis-Wirkung und c) Glas-Oberflächen. Es bilden sich unterschiedliche Eisformen aus, die auf den Oberflächen unterschiedlich stark haften.
Figur 4 zeigt Eis-Adhäsionskräfte auf verschiedenen nicht erfindungsgemäßen Oberflächen im Vergleich.
Figur 5 zeigt Eis-Adhäsionskräfte auf verschiedenen erfindungsgemäß funktionalisierten Polyurethanfolien im Vergleich. P2 bis P11 und P13 bis P15 bezeichnen unterschiedliche PlasmaBeschichtungen.
Figur 6 zeigt ein ternäres Elementverteilungsdiagramm der Serien I-IV (XPS-Messungen), geschlossenene Kreise: Serie I und II (O₂-Flussvariationen), offene Kreise: Serie III und IV (Leistungsvariationen) und einen rechteckigen Punkt: Stöchiometrie von reinem HMDSO.
Figur 7 zeigt Raster-Kraft-Mikroskop (engl.: atomic force microscopy: AFM)-Aufnahmen (2 x 2 µm²) von 2 Schichten der Serie II (P = 160 W): a) Φ (O₂) = 220 sccm; b) Φ (O₂) = 60 sccm und c) Rauheitsanalyse (2 x 2 µm²) der Schichten der Serie I und II.
Figur 8 zeigt schematisch die erfindungsgemäß eingesetzten Strukturierungsmuster, insbesondere zeigt
   Figur 8.1 ein Linienmuster und
   Figur 8.2 ein Punktmuster einer erfindungsgemäß einsetzbaren Beschichtung.

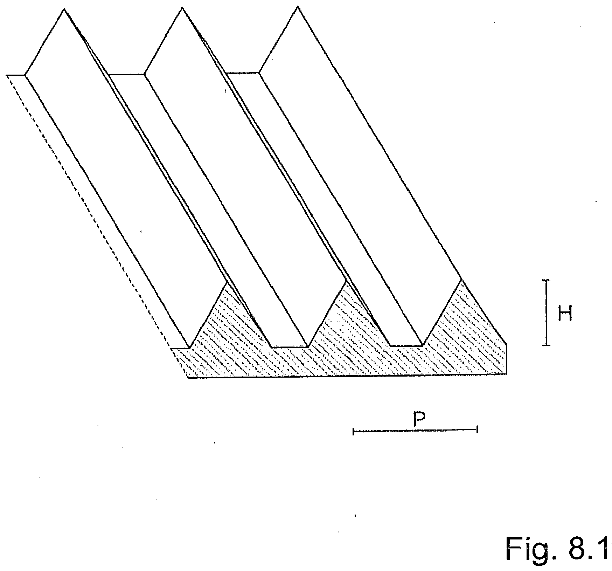

   Figur 8.1 stellt eine Oberflächenbeschichtung in Linienmusterstrukturierung dar. Durch das Linienmuster wird eine besonders schlechte Eishaftung erreicht. Schematisch dargestellt ist die Periodizität P und die Strukturhöhe H mit einer Periodizität von 20, 40, 80, 100, 120, 140, 180 µm und einer Strukturhöhe H von 20, 40, 80, 100, 120, 140, 180 µm (Cassie-Baxter-Regime (heterogene Benetzung)).

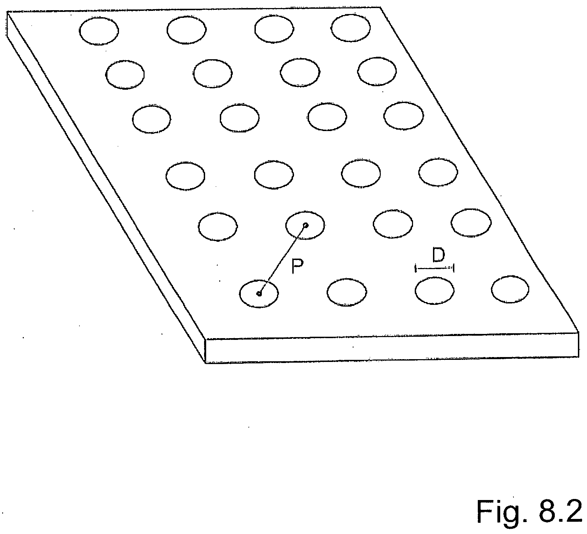

   Figur 8.2 stellt ein alternativ verwendbares Punktmuster, bestehend aus hydrophilen Punkten mit einem Kontaktwinkel < 10° dar, welches auf der hydrophoben Anti-Eis-beschichteten Oberfläche ein gezieltes Eiskristallwachstum an den vorgegebenen Punkten erreicht, sodass sich die dort bildenden Eiskristalle, die nicht miteinander verbunden sind, durch den Fahrtwind leichter abreißen lassen. Bevorzugt ist eine Periodizität von P = 20, 40, 80, 100, 120, 140, 180 µm. Der Durchmesser D der hydrophilen Punkte kann 20, 40, 80, 100, 120, 140 oder 180 µm betragen.

### Beispiel 1

### Gefrierpunktserniedrigung

Ein flüssiger Wassertropfen wird auf einer unbeschichteten Referenzfolie aus Polyurethan und gleichzeitig auf einer beschichteten Polyurethanfolie (Zusammensetzung laut ESCA (Wasserstoffnachweis nicht möglich): 51 Atom-% Fluor und 49 Atom-% Kohlenstoff und Wasserstoff) aufgebracht. Die Beschichtung der Polyurethanfolie erfolgt mittels eines Niederdruckplasmaverfahren (Haupt et al., Vakuum in Forschung und Praxis, 2005, 17(6), 329-335). Anschließend wird die Oberfläche auf unter 0 °C gekühlt. Es zeigt sich, dass auf der unbeschichteten Referenzfolie der Tropfen in gefrorener Form (T = -5,4 °C) vorliegt, während der Tropfen auf der beschichteten Folie in flüssiger Form (T = -6 °C) verbleibt.

### Beispiel 2

### Eigenschaften der gefrierpunktserniedrigenden Beschichtung

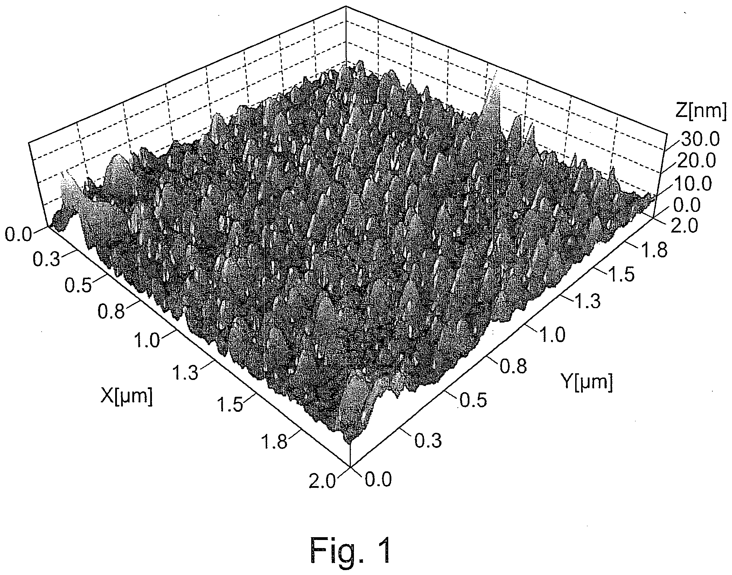

Figur 1 zeigt die Topographie, insbesondere Strukturierung im Nanometerbereich (Raster-Kraft-Mikroskop-Bild) einer fluorhaltigen Plasmabeschichtung (Zusammensetzung laut ESCA (Wasserstoffnachweis nicht möglich): 51 Atom-% Fluor und 49 Atom-% Kohlenstoff und Wasserstoff) auf einer Polyurethanfolie mit Anti-Eis-Wirkung. Solche Oberflächen haben Oberflächenenergien < 20 mJ/m.

Durch die Behandlung der Oberflächen mit Plasmen lässt sich ein besonders großer Bereich an gewünschten Oberflächenenergien einstellen. Die Oberflächenenergie sinkt in der Ordnung der funktionellen Oberflächengruppen -CH₂ > -CH₃ > -CF₂ > -CF₂H > -CF₃, die auf der Oberfläche angebunden werden.

Im Eis ist das Wasser-Molekül räumlich fixiert und bildet die höchstmögliche Anzahl von vier Wasserstoff-Brücken aus. Dadurch entsteht ein regelmäßiges Kristallgitter. Bei Normaldruck liegt Eis in einer stabilen hexagonalen Modifikation vor. Dabei sind die SauerstoffAtome nahezu tetraedrisch von vier weiteren Nachbarn über Wasserstoff-Brücken koordiniert. Im Phasendiagramm hat Wasser mehr feste Modifikationen als jeder andere Stoff: 13 kristalline, 5 amorphe sowie 1 flüssiger, 1 überkritischer und 1 gasförmiger. In unserer Biosphäre, d.h. in Höhen über dem Erdboden von bis zu 60 km, kristallisiert Eis jedoch vorwiegend im hexagonalen Kristallsystem. Kristallisationskeime, also Verunreinigungen wie Staubpartikel und ähnliches, fördern die Kristallbildung, da sich die kristallisierenden Wassermoleküle an diese anlagern. Sehr reines (destilliertes) Wasser kann hingegen bis zu -70 °C unterkühlt werden.

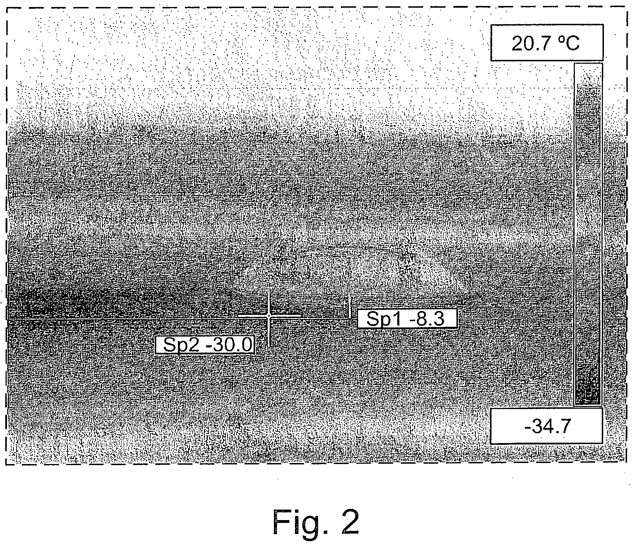

Figur 2 zeigt eine thermographische Aufnahme, aufgenommen mit einer Infrarot-Wärmebildkamera, die kleinste Temperaturunterschiede berührungslos messen kann, eines (noch flüssigen) Wassertropfens auf einer ca. -30°C kalten, fluorhaltigen Plasmabeschichtung auf einer Polyurethanfolie (Zusammensetzung laut ESCA (Wasserstoffnachweis nicht möglich): 51 Atom-% Fluor und 49 Atom-% Kohlenstoff und Wasserstoff). Der Tropfen selbst hat kurz nach dem Auftreffen auf die Oberfläche eine Temperatur von ca. -8° C und befindet sich noch in einem flüssigen unterkühlten Zustand, bevor er nach einigen Minuten bei noch tieferer Temperatur ausfriert.

Auf unterschiedlichen Oberflächen frieren Wassertröpfchen dabei in unterschiedlichen Formen aus. Entscheidend sind die chemische Zusammensetzung und die Rauheit der Oberfläche; beides hat Einfluss auf die Oberflächenenergie und damit auch auf das Eisbildungs- und Anti-Eis-Verhalten der Oberfläche. Je wasserabweisender, d.h. je hydrophober eine Oberfläche ist, je mehr wird der Tropfen ab- und zusammengezogen. Die vorliegenden erfindungsgemäßen silikonartigen oder Fluor-Kohlenstoff-haltigen Oberflächen, wie sie durch die hier beschriebene Plasmafunktionalisierung bereitgestellt werden, erfüllen diese Anforderungen. Metallische oder glasartige Oberflächen sind im Vergleich dazu sehr gut benetzbar (d.h. Wasserkontaktwinkel von kleiner als 50°): der Tropfen spreitet auf einer entsprechend größerer Fläche und friert vergleichsweise schnell aus. Allen Eis-Tropfen gemeinsam ist eine charakteristisch spitz zulaufende Oberfläche des Tropfens, die durch die anormale Volumenzunahme des Wassers durch das Ausfrieren bedingt ist.

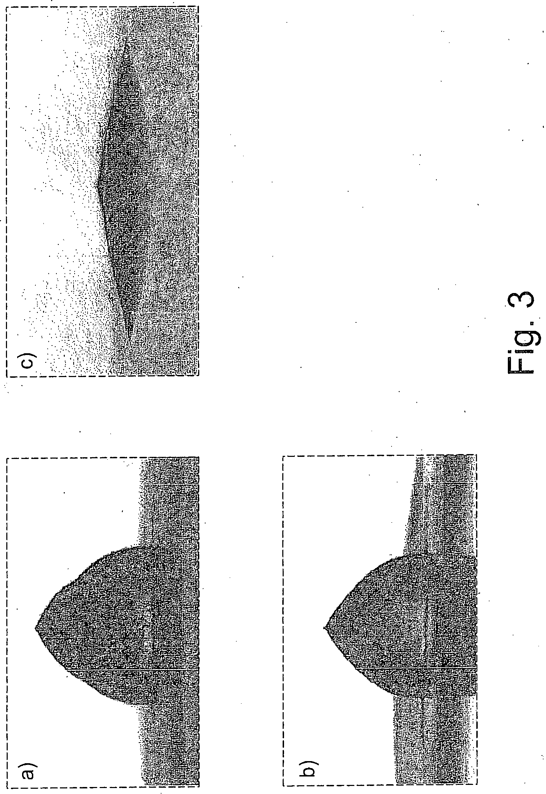

Figur 3 zeigt beispielhaft gefrorene Wassertröpfchen auf drei unterschiedlichen Oberflächen mit unterschiedlicher Oberflächenenergie. Die erfindungsgemäße Fluor-Kohlenstoff-plasmabeschichtete Folie (Zusammensetzung laut ESCA (Wasserstoffnachweis nicht möglich): 51 Atom-% Fluor und 49 Atom-% Kohlenstoff und Wasserstoff), (Figur 3b) zeigt dabei ein ähnliches Benetzungsverhalten wie eine PTFE(Polytetrafluorethylen)-Oberfläche ohne jegliche Beschichtung (Figur 3a). Relativ gut benetzbar sind metallische oder glasartige Oberfläche, wie sie in Figur 3c) gezeigt ist.

Bei der Adhäsion treten zwei kondensierten Phasen in Kontakt und bilden eine Grenzfläche. Der Adhäsionszustand zeichnet sich durch den mechanischen Zusammenhalt der beteiligten Phasen aus, welcher durch molekulare Wechselwirkungen in der Grenzfläche hervorgerufen wird. Die Adhäsionskraft als eine mechanische Kraft muss bei der Trennung der beiden Festkörper aufgebracht werden, wobei zwei neue Oberflächen entstehen und die Grenzfläche verschwindet.

Die Eis-Adhäsionskraft wird durch verschiedene Kräfte hervorgerufen. Die Annäherungskraft zwischen Eisfläche und Substratoberfläche wird durch elektrostatische Kräfte, Van-der-Waals-Kräfte und Wasserstoffbrücken-Kräfte verursacht. Die Trennkraft ist auf elektrostatische Kräfte, Van-der-Waals-Kräfte und Kapillarkräfte zurückzuführen.

In den Untersuchungen gemäß der vorliegenden Erfindung wurde die Eis-Haftung auf unterschiedlichen Kunststoffen im Vergleich zu plasmabeschichteten Oberflächen verglichen.

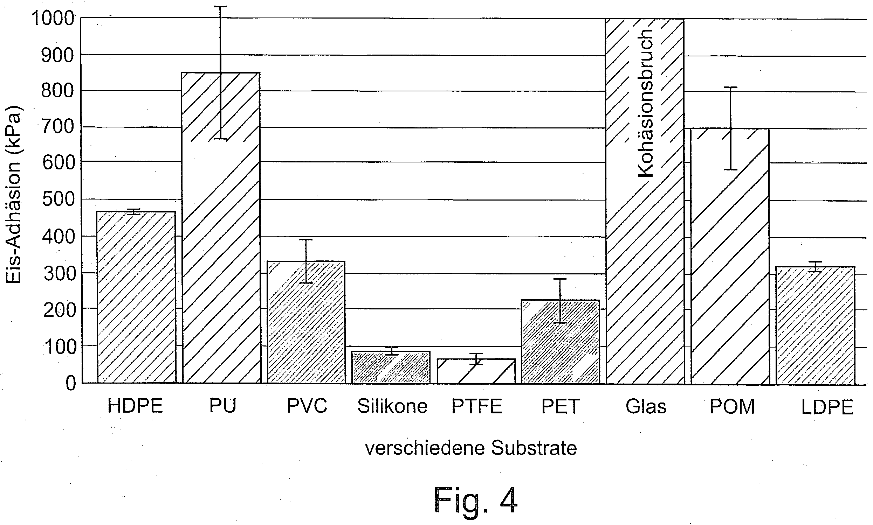

Dazu wird ein kleiner Zylinder, gefüllt mit flüssigem Wasser, knapp über der Oberfläche abgesetzt. Das Wasser wird nun auf der Oberfläche bei geregelter Temperatur (-20° C) und Luftfeuchteumgebungen (rel. Luftfeuchte < 1 %) eingefroren. Die Kraft, bezogen auf die Fläche des Eiszylinders, die benötigt wird, um den Zylinder mit dem gefrorenen Wasser von der Oberfläche abzuziehen, gibt dabei die Adhäsion an (Kraft pro Fläche). In Figur 4 sind die Eis-Adhäsionskräfte auf einigen Oberflächen im Vergleich dargestellt.

Die in Figur 4 verwendeten Abkürzungen für die Vergleichsmaterialien bedeuten: HDPE (High Densitiy Polyethylen), PU (Polyurethan), PVC (Polyvinylchlorid), PET (Polyethylenterephthalat), POM (Polyoxymethylen), LDPE (Low Density Polyethylen).

Wie aus dem Diagramm ersichtlich ist, zeigen Silikon und PTFE-Oberflächen ohne jegliche Beschichtungen die geringsten Eis- Adhäsionskräfte. Bei Glasoberflächen kommt es zum Kohäsionsbruch im Eis, d.h. das Eis lässt sich nicht von der Oberfläche durch mechanisches Abreißen entfernen: der Eiskristall bricht in seiner Struktur und splittert ab. Eisreste verbleiben dabei auf der Oberfläche.

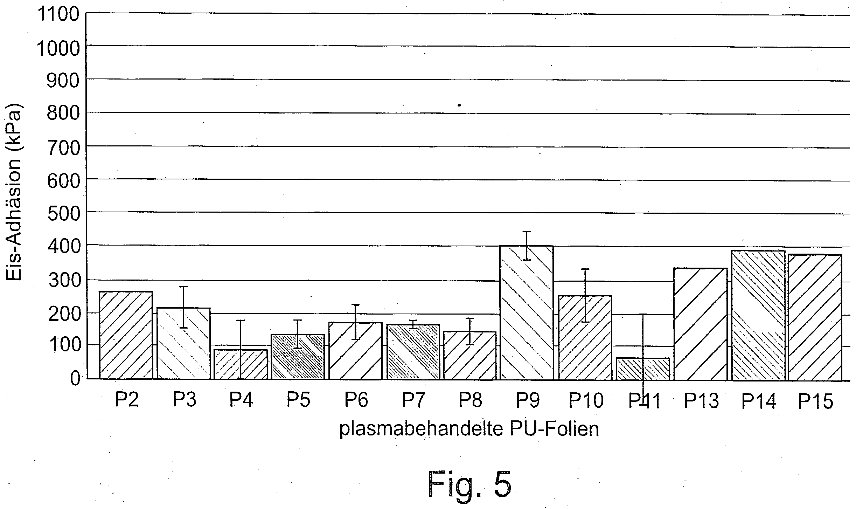

Auf erfindungsgemäß plasmabeschichteten Folien kann die Eis-Adhäsion hingegen deutlich beeinflusst werden. Figur 5 zeigt die Ergebnisse der Eis-Adhäsionskraftmessung auf unterschiedlichen im Plasma beschichteten Polyurethanfolien im Vergleich. P2 bis P11 und P13 bis P15 bezeichnen unterschiedliche Arten der Plasma-Beschichtung.

Die in Figur 5 dargestellten Beschichtungen P2 bis P5 stellen silikonartige Plasmabeschichtungen gemäß der vorliegenden Erfindung dar. Erkenntlich ist, dass P4 besonders vorteilhafte Eigenschaften aufweist (Zusammensetzung: Silizium 29 Atom-%, Sauerstoff 22 Atom-%, Kohlenstoff 49 Atom-%). P2, P3 und P5 weisen Silizium-, Sauerstoff- und Kohlenstoffgehalte jeweils im Bereich von 25 bis 29 Atom-% Silizium, 22 bis 45 Atom-% Sauerstoff und 26 bis 49 Atom-% Kohlenstoff auf.

P11 stellt eine fluorhaltige Beschichtung der vorliegenden Erfindung dar. Die restlichen dargestellten Beschichtungen sind Plasmabeschichtungen abweichender, aber erfindungsgemäßer Zusammensetzung.

Deutlich ist erkennbar, dass die Beschichtungen eine geringe Adhäsionskraft gegenüber Eis im Vergleich zur unbeschichteten Polyurethan- oder Aluminium-Oberfläche zeigen. Die Beschichtungen mit diesen kleinen Adhäsionswerten sind prädestiniert für eine Anwendung als Anti-Eis-Oberflächenfunktionalisierung.

### Beispiel 3

### Plasmapolymerisierte (pp) HMDSO-Schicht zur Gefrierpunktserniedrigung

Hochwertige siliziumorganische Schichten lassen sich mittels plasmachemischer Gasphasenabscheidung unter Verwendung des Monomers Hexamethyldisiloxan (HMDSO) herstellen.

Zur Abscheidung der Schichten wird das Monomer Hexamethyldisiloxan (HMDSO: (CH₃)₃SiOSi(CH₃)₃) verwendet. HMDSO ist nicht giftig, hat einen relativ hohen Dampfdruck (98 mbar bei 310 K) und ist daher leicht zu handhaben.

Der organische bzw. anorganische Charakter von HMDSO-Plasmaschichten hängt wesentlich von der eingespeisten Plasmaleistung ab. Eine Zunahme der Plasmaleistung führt zu einer Erhöhung der Elektronenenergien und damit zu einer stärkeren Fragmentierung der Vorläufer-Moleküle im Plasma. Die HMDSO-Moleküle spalten sich durch Elektronenstöße auf und es entstehen freie Radikale. Der Sauerstoffanteil im Plasma lässt sich zudem durch Zugabe von Sauerstoff deutlich steigern.

Die Parametersätze der Beschichtungsserien sind in Tabelle 1 zusammengefasst:

**Tabelle 1**

| | Serie I | Serie II | Serie III | Serie IV |
|---|---|---|---|---|
| | O₂-Variation | | Leistungsvariation | |
| Φ (O₂) (sccm) | 30-220 | 100-220 | 220 | 100 |
| P (W) | 350 | 100 | 100-400 | 100-400 |

Zusätzlich wurde eine reine HMDSO-Plasmapolymerschicht ohne Sauerstoffzugabe abgeschieden (Φ (HMDSO) = 60 sccm, P = 160 W, t = 2 min, p = 40 µbar).

### XPS-Analysen

Für beide Serien ist bei hohen Sauerstoffflüssen eine Sättigung des Sauerstoffeinbaus zu beobachten, welche bei hoher Plasmaleistung früher einsetzt. Im Sättigungsbereich entspricht das O/Si-Verhältnis der Stöchiometrie anorganischer, quarzähnlicher Schichten. Bei geringerer Sauerstoffzufuhr erhöht sich der organische Anteil in den Schichten durch Einbau von Kohlenwasserstoff-Gruppen, die im Plasma aufgrund der geringeren Fragmentierung vorhanden sind. Hierdurch werden die Schichten weicher und polymerähnlicher. Diese sind für die Gefrierpunktserniedrigung aufgrund der Topographie und der silikonartigen Zusammensetzung von besonderem Interesse.

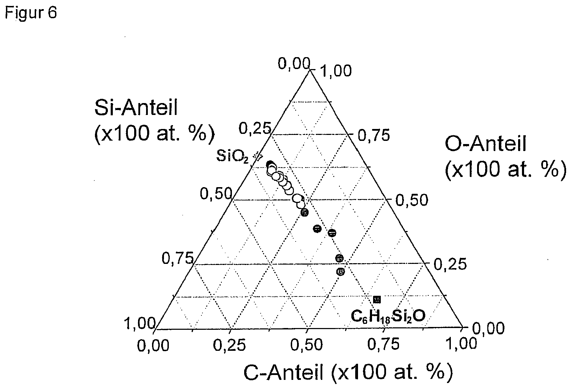

Die XPS-Ergebnisse der Serien I-IV sind in Figur 6 in einem ternären Elementverteilungsdiagramm zusammengefasst. Man erkennt, dass die Veränderung von Plasmaleistung und Gasmischungsverhältnis vor allem den Kohlenstoff- und Sauerstoffanteil der Schichten bestimmt. Der Siliziumanteil wird dagegen beim Übergang von polymerartigen zu glasartigen Schichten nur leicht von etwa 24 auf ca. 31 at. % erhöht. Weiterhin ist erkennbar, dass mit den gewählten Parametervariationen der Bereich zwischen reiner HMDSO-Polymerschicht und glasartigen Schichten gezielt eingestellt werden kann.

Bei der Interpretation der XPS-Ergebnisse muss beachtet werden, dass Wasserstoff mit dieser Methode nicht detektiert werden kann. Bei HMDSO-Schichten ohne Sauerstoffzugabe kann dieser jedoch bis zu 50 at. % und sogar mehr betragen. Bei glasartigen Schichten ist dieser Anteil hingegen deutlich geringer. FTIR-Untersuchungen zeigen, dass der Wasserstoff vor allem in Form von CH₂- und CH₃-Gruppen vorliegt. Darüber hinaus treten in den Spektren häufig auch CH-, SiH-, und OH-Schwingungsbanden in Erscheinung, sie sind jedoch deutlich schwächer ausgeprägt.

### Topographie der plasmapolymerisierten (pp) HMDSO-Schichten

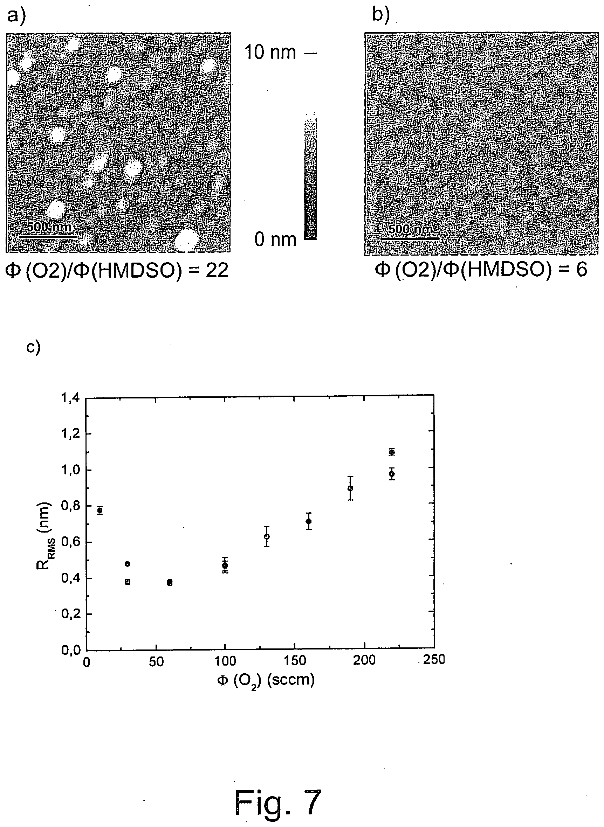

Die Topographie der Oberfläche hat zum einen Einfluss auf die Benetzbarkeit von Flüssigkeiten und zum anderen ist die Topographie (insbesondere die Rauheit) ein Faktor, der die gerfrierpunktserniedrigende Eigenschaften der Oberfläche mitbestimmt. Zur Abbildung der Oberflächentopographie wurde ein Rasterkraftmikroskop verwendet. Die Aufnahmen wurden im "Tapping"-Modus durchgeführt. Figur 7a) und b) zeigt vergleichende AFM-Aufnahmen je einer glasartigen und einer polymerartigen Schicht (Messfenster 2 x 2 µm²). Die Oberflächentopographien der glasartigen Schichten zeigen verschieden große, halbkugelförmige Agglomerate, die bei den polymerartigen Schichten nicht auftreten. Ein Substrateffekt kann hierbei ausgeschlossen werden, da alle Proben auf gleichen Substraten und mit identischer Vorbehandlung abgeschieden wurden. Zudem zeigte eine experimentelle Prüfung, dass die gewählte Plasmavorbehandlung keine signifikanten Rauheitsänderungen der Siliziumsubstrate verursacht.

In Figur 7c) sind die RMS-Rauhigkeiten (RMS: Root Mean Square, bestimmt mittels Raster-Kraftmikroskop (AFM)) der Schichten der Serien I und II in Abhängigkeit des Sauerstoffflusses aufgetragen. Die RMS-Rauhigkeiten wurden an jeweils mindestens drei verschiedenen Positionen je Probe bestimmt. Die dargestellten statistischen Fehler der RMS-Rauhigkeitswerte ergeben sich aus den Standardabweichungen der Einzelmessungen. Die minimale Rauheit der Schichten liegt für beide Serien bei etwa 0,38 nm bei einem Sauerstofffluss von 60 sccm. Sie steigt zu größeren Sauerstoffflüssen hin aufgrund der vermehrt auftretenden und größer werdenden Agglomerate linear an.

### Beispiel 4

### Beschichtung eines Rotorblatts

Sowohl die Beschichtung von auf ein Rotorblatt aufgebrachten Folien als auch des Rotorblatts selbst wird mittels eines Niederdruckplasmaverfahrens durchgeführt.

Die Strukturen können durch (Heiss)Prägen von Polyurethanfolien mittels eines Stempels (z.B. aus Edelstahl) hergestellt werden. Die Oberfläche wird dabei kurzzeitig (unter 2 Minuten) auf eine Temperatur von 100 -130° C gebracht und der Stempel in die Oberfläche gedrückt. Es kann entweder die Folie oder der Stempel erhitzt werden. Die Struktur des Stempels wird nun in die Folie übertragen. Dieses Verfahren kann auch über Rollen kontinuierlich durchgeführt werden. Der Stempel befindet sich dabei auf einer Rolle und die Folie wird über Rollen zum Rollenstempel gebracht. Dort wird mit bis zu 30 Bar und der genannten Temperatur die Struktur eingeprägt. Somit ist dieses Verfahren auch kontinuierlich von "Rolle-zu-Rolle" durchführbar. Anschließend erfolgt die Oberflächenbeschichtung der geprägten Strukturen mittels des genannten Niederdruckplasmaverfahrens.

## Patentansprüche

1. Verwendung einer Beschichtung enthaltend 15 bis 75 Atom-% Fluor und 25 bis 85 Atom-% weitere Komponenten (jeweils bestimmt gemäß XPS-Analyse) oder einer Si-, O- und C-haltigen Beschichtung für die Beschichtung mindestens einer Oberfläche eines Rotorblattes zur Gefrierpunktserniedrigung, wobei die Beschichtung eine Strukturierung in Form eines Punkt- oder Linienmusters aufweist.

2. Verwendung nach Anspruch 1, wobei die Si-, O- und C-haltigen Beschichtung 25 bis 29 Atom-% Silizium, 22 bis 45 Atom-% Sauerstoff und 26 bis 49 Atom-% Kohlenstoff enthält (jeweils gemäß XPS-Analyse und jeweils bezogen auf Gesamt Atom-% der Beschichtung).

3. Verwendung nach einem der vorstehenden Ansprüche, wobei die Beschichtung mittels eines Trägers auf einer Oberfläche des Rotorblatts aufgebracht ist.

4. Verwendung nach einem der vorstehenden Ansprüche, wobei die Beschichtung auf dem Rotorblatt oder dem Träger mittels eines Niederdruckplasmaverfahrens aufgebracht ist.

## Claims

1. Use of a coating containing 15 to 75 atom-% fluorine and 25 to 85 atom-% further components (each determined according to XPS analysis) or a coating containing Si, O, and C for coating at least one surface of a rotor blade to lower the freezing point, wherein the coating has a structuring in the form of a dot or line pattern.

2. Use according to claim 1, wherein the coating containing Si, O, and C contains 25 to 29 atom-% silicon, 22 to 45 atom-% oxygen and 26 to 49 atom-% carbon (each determined according to XPS analysis and each with reference to total atom-% of the coating).

3. Use according to any of the preceding claims, wherein the coating is applied to a surface of the rotor blade by means of a support.

4. Use according to any of the preceding claims, wherein the coating is applied to the rotor blade or to the support by means of a low-pressure plasma method.

## Revendications

1. Utilisation d'un revêtement contenant de 15 à 75 % at. de fluor et de 25 à 85 % at. d'autres composants (en chaque cas déterminé par l'analyse XPS), ou d'un revêtement contenant de Si, O et C, pour revêtir au moins une surface d'une pale de rotor afin d'abaisser le point de congélation, le revêtement ayant une structuration sous forme d'un motif de points ou un motif linéaire.

2. Utilisation selon la revendication 1, dans laquelle le revêtement contenant de Si, O et C contient de 25 à 29 % at. de silicium, de 22 à 45 % at. de l'oxygène, et de 26 à 49 % at. de carbone (en chaque cas selon l'analyse XPS et par rapport au pourcentage atomique total du revêtement).

3. Utilisation selon l'une quelconque des revendications précédentes, dans laquelle le revêtement est appliqué sur une des surfaces de la pale de rotor au moyen d'un support.

4. Utilisation selon l'une quelconque des revendications précédentes, dans laquelle le revêtement est appliqué sur la pale de rotor ou sur le support au moyen d'un procédé au plasma à basse pression.
